# EUROPÄISCHE PATENTSCHRIFT

(11) **EP 0 332 823 B1**
(45) Veröffentlichungstag und Bekanntmachung des Hinweises auf die Patenterteilung: **21.04.1993**
(21) Anmeldenummer: 89101515.8
(22) Anmeldetag: 28.01.1989
(51) Int. Cl.: B23B 5/02, B23B 5/28

(54) **Drehmaschine zur Bearbeitung der Bremsscheiben eines aus einem Schienenfahrzeug ausgebauten Radsatzes**
Lathe for machining the brake discs of a railway vehicle wheel set
Tour pour l'usinage de disques de frein d'une paire de roue d'un véhicule de chemin de fer

(30) Priorität: 18.03.1988 DE 3809250
(43) Veröffentlichungstag der Anmeldung: 20.09.1989
(73) Patentinhaber: Hoesch Maschinenfabrik Deutschland Aktiengesellschaft, 44145 Dortmund (DE)
(72) Erfinder: Bathelt, Kurt, D-4600 Dortmund 1 (DE); Beck, Wolfgang, D-4600 Dortmund 1 (DE); Brinkmann, Dirk, Dipl.-Ing., D-4670 Lünen-Niederaden (DE); Reske, Wilfried, D-5840 Schwerte (DE)

(56) Entgegenhaltungen:
- EP-A- 0 181 456
- DE-A- 2 424 305
- FR-A- 2 063 321

## Beschreibung

Die Erfindung bezieht sich auf eine Drehmaschine zur Bearbeitung der Bremsscheiben eines aus einem Schienenfahrzeug ausgebauten Radsatzes, der zwischen zwei Körnerspitzen der Drehmaschine eingespannt ist, mit zwei Reitstöcken, einer Radsatz-Hub- und -Absenkvorrichtung, mindestens einem Drehsupport und einem Drehwerkzeug sowie mehreren angetriebenen Reibrollen, die schwenkbar angeordnet sind und an den beiden Rädern des Radsatzes angreifen.

Eine Drehmaschine der vorgenannten Art ist durch das Dokument DE-A-2 424 305 bekannt.

Bei einer solchen Drehmaschine sind zum Antrieb eines jeden Rades des Radsatzes zwei Reibrollen eingesetzt, von denen eine an der Lauffläche und die andere an der inneren Seitenfläche des Radreifenumrisses angreift.

Diese Drehmaschine ist nicht zur Reprofilierung der Radreifenumrisse in einem Schnitt geeignet, da die Reibrollen nur geringe Umfangskräfte auf die Räder des Radsatzes übertragen können.

Der Erfindung liegt die Aufgabe zugrunde, eine Drehmaschine der eingangs genannten Art so auszubilden, daß sie die Übertragung großer Umfangskräfte auf die Räder des Radsatzes und somit die Reprofilierung der Radreifenumrisse in einem Schnitt ermöglicht.

Erfindungsgemäß wird diese Aufgabe dadurch gelöst, daß zum Antrieb eines jeden Rades des Radsatzes vier an die Lauffläche andrückbare Reibrollen vorgesehen sind, die einzeln um je eine parallel zur Drehachse der Drehmaschine angeordnete Schwenkachse schwenkbar sind und paarweise im wesentlichen diametral gegenüberliegen.

Vorzugsweise ist jede Reibrolle auf einer Antriebswelle befestigt.

Jede Antriebswelle ist in einer Schwinge drehbar gelagert.

Nach einem weiteren Merkmal der Erfindung sind die Antriebswellen der an eIne Lauffläche andrückbaren Reibrollen an ein von einem Getriebemotor angetriebenes Verteilergetriebe gekuppelt.

Jedes Verteilergetriebe enthält vier Doppelriementriebe.

Durch das Dokument FR-A-2 063 321 ist eine Maschine zur Bearbeitung von einzelnen Waggonrädern bekannt, bei der zur Zentrierung und zum Antrieb eines Waggonrades zwei symmetrisch zur Maschinenachse angeordnete Wagen mit je zwei an die Lauffläche andrückbaren Reibrollen und je einer die innere Radreifenumrißseite stützende Führungsrolle eingesetzt sind.

Die Wagen sind quer zur Maschinenachse synchron zu- und auseinander verschiebbar, so daß die vier Reibrollen beider Wagen stets paarweise diametral gegenüberliegen.

Eine solche Maschine kann jedoch ein unrundes Waggonrad, das durch unterschiedlichen Verschleiß an der Lauffläche entstanden ist, nicht bearbeiten, da das synchrone Andrücken der Reibrollen an die Lauffläche zur Blockierung des Waggonrades führt.

Im folgenden wird die Erfindung anhand einer Zeichnung, in der ein Ausführungsbeispiel schematisch dargestellt ist, näher beschrieben.

Es zeigt
- Fig. 1: eine Drehmaschine mit zwei Reibrollenantrieben und einem zwischen zwei Körnerspitzen eingespannten Radsatz in Ansicht und einen Schnitt durch zwei Ausrollschienen und ein Fundament,
- Fig. 2: einen Schnitt entsprechend der Linie II-II in Fig. 1 in vergrößertem Maßstab,
- Fig. 3: einen Schnitt durch die Drehmaschine ähnlich Fig. 2, wobei die Reibrollen nach außen abgeschwenkt sind und der bearbeitete Radsatz auf den Ausrollschienen steht,

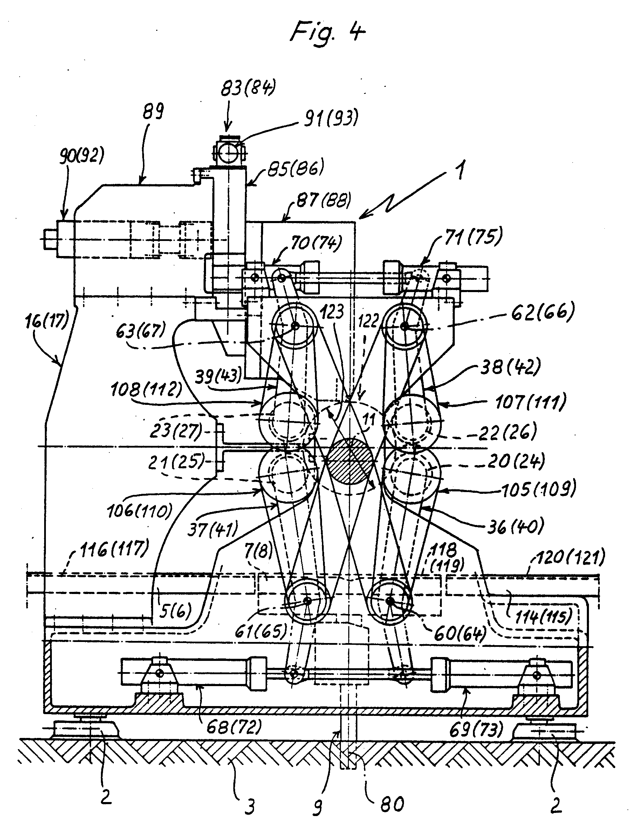

- Fig. 4: einen Schnitt durch die Drehmaschine ähnlich Fig. 2, wobei die Reibrollen an die Laufflächen der Räder eines Radsatzes kleinen Laufkreisdurchmessers angedrückt sind,
- Fig. 5: den zwischen zwei Körnerspitzen eingespannten Radsatz nach Fig. 1 in Ansicht mit Darstellung der Reibrollenantriebe in abgewickelter Form.

Eine Drehmaschine 1 steht auf mehreren höhen- und seitenverstellbaren Stützelementen 2, die auf einem Fundament 3 angeordnet sind.

Ein zu bearbeitender Radsatz 4 wird zunächst über die Einrollschienen 5, 6 auf die Schienen 7, 8 einer Hub- und Absenkvorrichtung 9 gerollt. Die Hub- und Absenkvorrichtung 9 hebt nun den Radsatz 4 in eine Position, in der die Radsatzachse 10 mit der Drehachse 11 der Drehmaschine 1 fluchtet. Danach wird der Radsatz 4 durch zwei Körnerspitzen 12, 13 gespannt.

Jede Körnerspitze 12, 13 ist eingesetzt in eine in Richtung der Drehachse 11 verschiebbare Pinole 14, 15 eines Reitstockes 16, 17.

Die Drehmaschine 1 weist zwei Reibrollenantriebe 18, 19 mit je vier Reibrollen 20, 21, 22, 23, 24, 25, 26, 27 auf.

Jede Reibrolle 20 bis 27 ist auf einer Antriebswelle 28, 29, 30, 31, 32, 33, 34, 35 befestigt, die in einer Schwinge 36, 37, 38, 39, 40, 41, 42, 43 in Drehlagern 44, 45, 46, 47, 48, 49, 50, 51, 52, 53, 54, 55, 56, 57, 58, 59 gehalten wird.

Jede Schwinge 36 bis 43 ist einzeln um je eine parallel zur Drehachse 11 angeordnete Schwenkachse 60, 61, 62, 63, 64, 65, 66, 67 schwenkbar. Die Schwenkbewegung einer jeden Schwinge 36 bis 43 erzeugt eine Verschiebevorrichtung 68, 69, 70, 71, 72, 73, 74, 75.

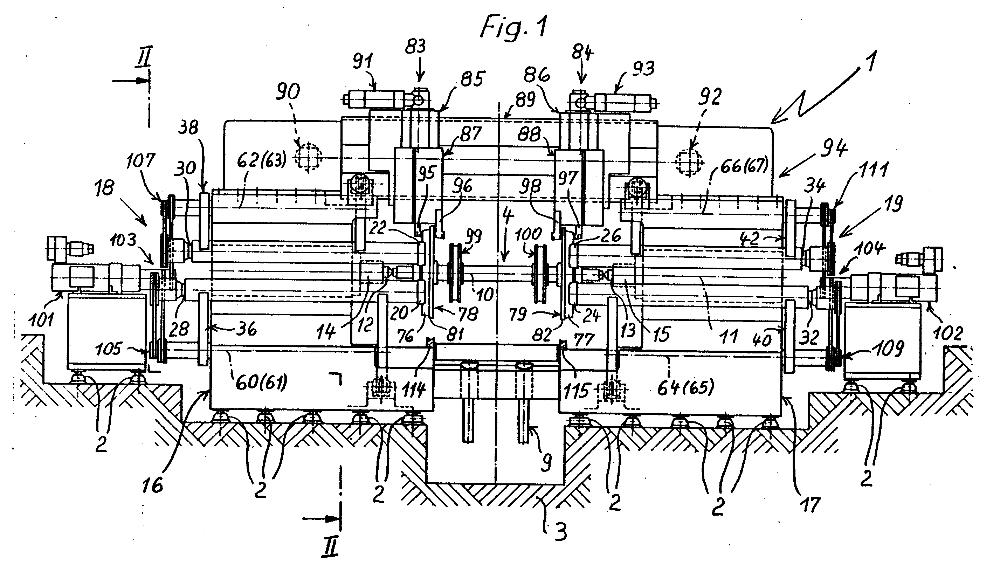

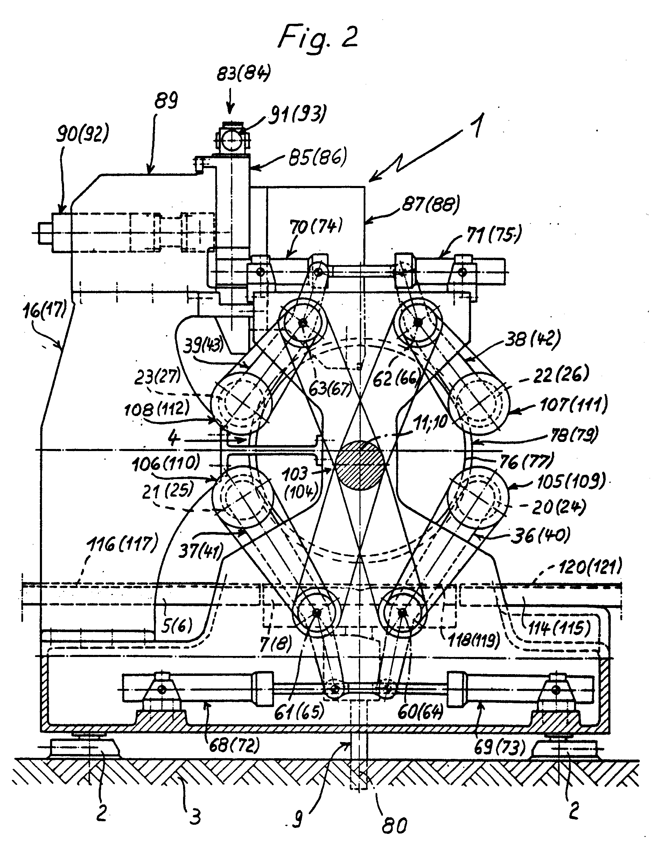

Nach dem Spannen des Radsatzes 4 werden je vier Reibrollen 20 bis 23 und 24 bis 27 eines jeden Reibrollenantriebes 18, 19 an die Lauffläche 76, 77 eines Rades 78, 79 des Radsatzes 4 gedrückt (Fig. 1 und 2). Hierbei liegen die Reibrollen 20 bis 27 paarweise im wesentlichen diametral gegenüber. Die Reibrollen 20 bis 27 bilden ferner eine Symmetrie zu der durch die Drehachse 11 gehenden Senkrechtebene 80 (Fig. 2).

Die Drehmaschine 1 besitzt zur Reprofilierung der beiden Radreifenumrisse 81, 82 des Radsatzes 4 zwei Drehsupporte 83, 84.

Jeder Drehsupport 83, 84 ist mit einem Längs- (85, 86) und einem Planschlitten 87, 88 ausgeführt.

Die Längsschlitten 85, 86 der Drehsupporte 83, 84 sind auf einem Maschinenbett 89 in Richtung der Drehachse 11 der Drehmaschine 1 verschiebbar angeordnet.

Angetrieben werden die Drehsupporte 83, 84 von je zwei Motoren 90, 91, 92, 93, wobei die Motoren 90, 92 die Längs- und die Motoren 91, 93 die Planvorschubbewegung erzeugen.

Die beiden Reitstöcke 16, 17 und das Maschinenbett 89 stellen eine portalförmige Baueinheit 94 dar.

Die Reprofilierung der beiden Radreifenumrisse 81, 82 erfolgt gleichzeitig, und zwar mit den auf den Planschlitten 87, 88 befestigten Drehwerkzeugen 95, 96, 97, 98 in der durch die Drehachse 11 gehenden Senkrechtebene 80.

Zur Bearbeitung der beiden Bremsscheiben 99, 100 des Radsatzes 4 werden besondere Drehwerkzeuge (nicht dargestellt) benutzt.

Die Drehbewegung der jeweils an eine Lauffläche 76, 77 angedrückten vier Reibrollen 20 bis 23 und 24 bis 27 erzeugt ein Getriebemotor 101, 102.

Jeder Getriebemotor 101, 102 treibt über ein Verteilergetriebe 103, 104 gleichzeitig vier Antriebswellen 28 bis 31 und 32 bis 35 an.

Zu jedem Verteilergetriebe 103, 104 gehören vier Doppelriementriebe 105, 106, 107, 108, 109, 110, 111, 112. Jeder Doppelriementrieb 105 bis 112 ist an eine Antriebswelle 28 bis 35 gekuppelt.

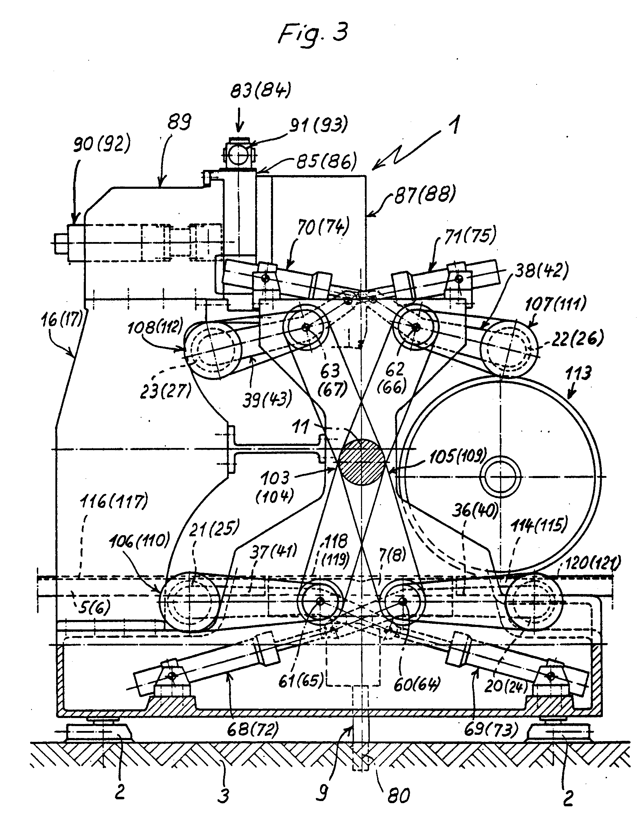

Sobald die Radsatzbearbeitung abgeschlossen ist, werden nacheinander die Drehsupporte 83, 84 in ihre Ausgangsstellung zurückbewegt, die Reibrollen 20 bis 27 nach außen abgeschwenkt und der bearbeitete Radsatz 113 ausgespannt, abgesenkt sowie von den Schienen 7, 8 der Hub- und Absenkvorrichtung 9 auf die Ausrollschienen 114, 115 gerollt (Fig. 3).

Die Einrollschienen 5, 6, die Schienen 7, 8 und die Ausrollschienen 114, 115 sind mit je einer Laufrille 116, 117, 118, 119, 120, 121 versehen.

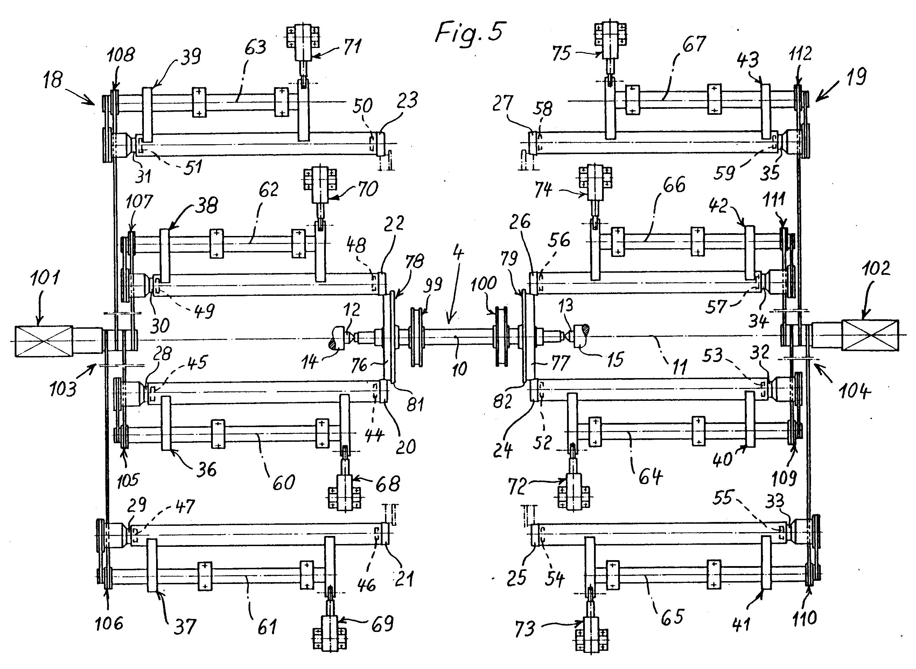

Fig. 5 soll zeigen, daß die Drehmaschine 1 auch zur Bearbeitung eines Radsatzes 122 mit sehr kleinem Laufkreisdurchmesser 123 einsetzbar ist.

## Patentansprüche

1. Drehmaschine (1) zur Bearbeitung der Bremsscheiben (99, 100) eines aus einem Schienenfahrzeug ausgebauten Radsatzes (4), der zwischen zwei Körnerspitzen (12, 13) der Drehmaschine (1) eingespannt ist, mit zwei Reitstöcken (16, 17), einer Radsatz-Hub- und -Absenkvorrichtung (9), mindestens einem Drehsupport (83, 84) und einem Drehwerkzeug (95, 96, 97, 98) sowie mehreren angetriebenen Reibrollen (20, 21, 22, 23, 24, 25, 26, 27), die schwenkbar angeordnet sind und an den beiden Rädern (78, 79) des Radsatzes (4) angreifen, dadurch gekennzeichnet, daß zum Antrieb eines jeden Rades (78, 79) des Radsatzes (4) vier an die Lauffläche (76, 77) andrückbare Reibrollen (20, 21, 22, 23, 24, 25, 26, 27) vorgesehen sind, die einzeln um je eine parallel zur Drehachse (11) der Drehmaschine (1) angeordnete Schwenkachse (60, 61, 62, 63, 64, 65, 66, 67) schwenkbar sind und paarweise im wesentlichen diametral gegenüberliegen.

2. Drehmaschine nach Anspruch 1, dadurch gekennzeichnet, daß jede Reibrolle (20 bis 27) auf einer Antriebswelle (28, 29, 30, 31, 32, 33, 34, 35) befestigt ist.

3. Drehmaschine nach den Ansprüchen 1 und 2, dadurch gekennzeichnet, daß jede Antriebswelle (28 bis 35) in einer Schwinge (36, 37, 38, 39, 40, 41, 42, 43) drehbar gelagert ist.

4. Drehmaschine nach den Ansprüchen 1 bis 3, dadurch gekennzeichnet, daß die Antriebswellen (28 bis 31 und 32 bis 35) der an eine Lauffläche (76, 77) andrückbaren Reibrollen (20 bis 23 und 24 bis 27) an ein von einem Getriebemotor (101, 102) angetriebenes Verteilergetriebe (103, 104) gekuppelt sind.

5. Drehmaschine nach den Ansprüchen 1 bis 4, dadurch gekennzeichnet, daß jedes Verteilergetriebe (103, 104) vier Doppelriementriebe (105, 106, 107, 108, 109, 110, 111, 112) enthält.

## Claims

1. Lathe (1) for machining brake discs (99, 100) of a railway vehicle wheel set (4), which is clamped between two dead centres (12, 13) of the lathe (1), having two tailstocks (16, 17), a wheel set raising and lowering device (9), at least one swivel head (83, 84) and a lathe tool (95, 96, 97, 98) and several driven friction rollers (20, 21, 22, 23, 24, 25, 26, 27), which are swivel mounted and engage the two wheels (78, 79) of the wheel set (4), characterised in that four friction rollers (20, 21, 22, 23, 24, 25, 26, 27), which can be pressed against the running surface (76, 77) are provided to drive each of the wheels (78, 79) of the wheel set (4) and these friction rollers are each individually pivotable about a pivot axis (60, 61, 62, 63, 64, 65, 66, 67) which is arranged parallel to the rotational axis (11) of the lathe (1) and these friction rollers lie substantially diametrically opposite each other in pairs.

2. Lathe according to claim 1, characterised in that each friction roller (20 to 27) is attached to a drive shaft (28, 29, 30, 31, 32, 33, 34, 35).

3. Lathe according to claims 1 and 2, characterised in that each drive shaft (28 to 35) is rotatably mounted in a link member (36, 37, 38, 39, 40, 41, 42, 43).

4. Lathe according to claims 1 to 3, characterised in that the drive shafts (28 to 31 and 32 to 35) of the friction rollers (20 to 23 and 24 to 27) which can be pressed against a running surface (76, 77) are coupled to a transmission system (103, 104) which is driven by a gear motor (101, 102).

5. Lathe according to claims 1 to 4, characterised in that each transmission system (103, 104) comprises four double belt drives (105, 106, 107, 108, 109, 110, 111, 112).

## Revendications

1. Tour (1) pour l'usinage de disques de frein (99, 100) d'une paire de roues (4) démontée d'un véhicule de chemin de fer, qui est enserrée entre deux pointes coniques (12, 13) du tour (1), avec deux contre-poupées (16, 17), un dispositif de levage et d'abaissement (9) de la paire de roues, au moins un chariot (83, 84) et un outil de tournage (95, 96, 97, 98) ainsi que plusieurs rouleaux de friction entraînés (20, 21, 22, 23, 24, 25, 26, 27), qui sont disposés à pivotement et qui attaquent les deux roues (78, 79) de la paire de roues (4), caractérisé en ce que, pour l'entraînement de chaque roue (78, 79) de la paire de roues (4), il comprend quatre rouleaux de friction (20, 21, 22, 23, 24, 25, 26, 27) pouvant être pressés contre la surface de roulement (76, 77), qui sont chacuns disposés à pivotement autour d'un axe de pivotement (60, 61, 62, 63, 64, 65, 66, 67) parallèle à l'axe principal (11) du tour (1), et sont en substance opposés par paire.

2. Tour selon la revendication 1, caractérisé en ce que chaque rouleau de friction (20 à 27) est fixé à un arbre moteur (28, 29, 30, 31, 32, 33, 34, 35).

3. Tour selon les revendications 1 et 2, caractérisé en ce que chaque arbre moteur (28 à 35) est logé à rotation dans une coulisse (36, 37, 38, 39, 40, 41, 42, 43).

4. Tour selon les revendications 1 à 3, caractérisé en ce que les arbres moteur (28 à 31, et 32 à 35) des rouleaux de friction (20 à 23 et 24 à 27) pouvant être pressés contre une surface de roulement (76, 77) sont couplés à un engrenage distributeur (103, 104) entraîné par un moto-réducteur (101, 102).

5. Tour selon les revendications 1 à 4, caractérisé en ce que chaque engrenage distributeur (103, 104) comporte quatre transmissions par courroies doubles (105, 106, 107, 108, 109, 110, 111, 112).
